# DEMANDE DE BREVET EUROPEEN

(11) **EP 1 013 985 A2**
(43) Date de publication de la demande: **28.06.2000**
(21) Numéro de dépôt: 00107213.1
(22) Date de dépôt: 02.09.1998
(51) Int. Cl.: F16P 3/08, E05B 65/00

(54) **Dispositif de protection de porte d'enceinte industrielle, porte munie de celui-ci et enceinte munie de la porte**

(30) Priorité: 02.09.1997 FR 9710912
(62) Demande divisionnaire de: 98402177.4
(71) Demandeur: Gunnebo Troax AB, 330-33 Hillerstorp (SE)
(72) Inventeur: Thimon, Jacques, 73100 Tresserve (FR)
(74) Mandataire: Keib, Gérard

(57) **Abrégé**

L'invention concerne un dispositif de protection destiné à être associé à une porte faisant partie d'une enceinte de protection d'une machine, d'une ligne ou d'un ensemble automatisé ou robotisé, comprenant :
- des moyens (1) formant serrure, comportant un pêne (16) ;
- des moyens (47) de contrôle aptes à ce que le fonctionnement de la machine, la ligne ou l'ensemble soit permis lorsque la porte est fermée et verrouillée ;
Le pêne (16) est monté coulissant entre la position de verrouillage et la position de déverrouillage.
Les moyens de contrôle (47) sont structurellement distincts du pêne (16).
Les moyens de sécurité (21 à 26) sont aptes à ne fonctionner que pour le déverrouillage des moyens (1) formant serrure, en agissant positivement et directement sur le pêne (16), pour son déverrouillage, sans l'intermédiaire d'un ressort ou autre.

## Description

L'invention concerne la protection physique des machines, lignes, ensembles automatisés ou robotisés ou analogue.

Elle vise plus particulièrement un dispositif de protection destiné à être associé à une porte, une porte ayant un tel dispositif de protection, et enfin, une enceinte de protection comportant au moins une telle porte.

Le document FR-A-2 661 707 concerne un système de fermeture d'un protecteur d'accès tel qu'un portillon à une zone protégée telle que celle contenant une machine dangereuse.

Selon ce document, le portillon est verrouillé par une targette dont le coulissement est empêché ou autorisé par un électro-aimant ayant un doigt mobile, actionné dans certaines conditions.

Le document EP-A-577 360 concerne un arrêt d'urgence permettant de déverrouiller une porte d'une enceinte de protection, depuis l'intérieur.

Le dispositif selon ce document est tel que le pêne est pivotant et que le moyen de sécurité qu'est l'arrêt d'urgence agit indirectement et de façon non positive sur le pêne.

On connaît par ailleurs des systèmes connus sous le nom "d'anti-panique" (DE-A-31 01 009), et dont l'objet vise à permettre l'ouverture d'urgence d'une porte du côté intérieur.

Ces systèmes ne sont toutefois pas adaptés à l'application particulière considérée ici, à savoir la protection physique de machines, lignes, ensembles automatisés ou robotisé ou analogue.

L'invention qui s'applique spécifiquement à la protection physique de machines, lignes, ensembles automatisés ou robotisés ou analogue a pour objet d'assurer une protection physique efficace, optimale et conforme aux exigences réglementaires.

En particulier la protection permet a toute personne qui serait accidentellement enfermée dans l'enceinte de pouvoir s'en échapper.

Simultanément, la machine, lignes etc. ne peut fonctionner que lorsque la porte est non seulement fermée mais verrouillée.

Le verrouillage ne peut être réalisé que de l'extérieur de l'enceinte.

Le cas échéant ce verrouillage est rendu impossible lorsque, précisément, une personne se trouve dans l'enceinte.

L'efficacité et l'optimisation de la protection concernent la non accessibilité à l'organe de verrouillage extérieur depuis l'intérieur de l'enceinte lorsque la porte est fermée même lorsque la porte et les panneaux de l'enceinte sont de type grillagé ; la possibilité de réglage ; l'indépendance du verrouillage mécanique et du contact électrique de commande de la machine ou analogue ; la sécurité du déblocage du dispositif par une personne à l'intérieur de l'enceinte de protection.

Des caractéristiques de l'invention sont mentionnées dans les revendications.

L'invention sera mieux comprise à la lecture de la description qui va suivre.
La figure 1 est une vue schématique frontale du dispositif de protection, en position de verrouillage.
La figure 2 est une vue schématique de côté du dispositif de protection en position de verrouillage.
La figure 3 est une vue schématique de dessus du dispositif de protection en position de verrouillage.
La figure 4 est une vue schématique frontale du dispositif de protection, en position de déverrouillage.
La figure 5 est une vue schématique de côté du dispositif de protection, en position de déverrouillage.
La figure 6 est une vue schématique de dessus du dispositif de protection, en position de déverrouillage.
La figure 7 représente une variante d'une plaque du dispositif de protection, en perspective.
La figure 8 est une vue en coupe, suivant un plan longitudinal et vertical de la plaque selon la figure 7.
La figure 9 est une vue schématique éclatée du dispositif de protection, montrant des moyens de contrôle du fonctionnement de la machine, ligne ou ensemble.
La figure 10 est une vue schématique frontale du dispositif de protection montrant les moyens de contrôle, en position de déverrouillage.
La figure 11 est une vue schématique frontale du dispositif de protection, montrant les moyens de contrôle, en position de verrouillage.
Les figures 12, 13 et 14 sont des vues schématiques frontales d'une partie de l'enceinte de protection, comportant une porte munie du dispositif de protection, respectivement fermée et verrouillée, fermée et déverrouillée, déverrouillée et ouverte.
Les figures 15, 16, et 17 sont des vues schématiques arrière de la partie de l'enceinte de protection, correspondant respectivement aux figures 12, 13 et 14.
La figure 18 est une vue schématique frontale du dispositif de protection, montrant une variante d'une plaque solidaire d'un pêne et faisant partie d'un dispositif de blocage de celui-ci.
La figure 19 est une vue schématique frontale de la variante selon la figure 18.

La description est faite en référence à une porte P destinée à clore une enceinte I industrielle de protection.

L'enceinte I entoure une ou plusieurs machine(s), ligne(s) ou ensemble(s) automatisé(s) ou robotisé(s), qui, en fonctionnement, peuvent présenter un danger pour une personne se trouvant dans l'enceinte I.

L'enceinte I close empêche une personne de l'extérieur de s'en approcher.

L'enceinte I comporte des poteaux métalliques profilés verticaux V, par exemple de section rectangulaire, fixés au sol par chevillage et espacés l'un de l'autre.

Des panneaux modulaires M de protection sont fixés aux poteaux V.

Une porte P est prévue entre deux poteaux V.

Les portes P et les panneaux M sont tels qu'ils sont interchangeables.

Afin d'assurer un montage et un démontage rapide des panneaux M, ceux-ci sont emboîtés en partie inférieure sur deux centrages et fixés en partie supérieure par deux vis imperdables nécessitant un outil, sur les poteaux V.

Il subsiste un espace entre la partie inférieure des panneaux M et de la porte P, par exemple de 200 mm, pour faciliter le nettoyage et éviter l'accumulation de déchets dans l'enceinte.

Dans une autre réalisation, les panneaux M sont fixés aux poteaux par des colliers réglables en hauteur.

L'espace subsistant entre la partie inférieure de la porte P et des panneaux M est alors réglable, par exemple entre 150 et 200 mm.

Des profilés de recouvrement, non représentés, sont prévus sur la partie supérieure des panneaux, contribuant ainsi à la rigidité de l'enceinte.

Dans le cas de sols en pente, des supports de fixation permettant le réglage des panneaux M en hauteur sont prévus pour compenser les différences de niveau, par exemple jusqu'à 30 mm par poteau.

Les panneaux M sont de hauteur et de largeur entre deux poteaux et/ou de hauteur le long des poteaux, modulables, la largeur des poteaux étant par exemple modulable par multiple, par exemple de 100 mm.

Dans les réalisations représentées, les panneaux M sont remplis par un maillage en acier soudé, permettant de voir l'intérieur de l'enceinte depuis l'extérieur et du type grillage.

Ce maillage est par exemple de 23 x 100 mm.

Les fils verticaux du maillage sont à l'extérieur, afin de supprimer les risques d'escalade du panneau M.

Les fils du maillage d'un diamètre de 3 ou 4 mm, sont droits, soudés entre eux et un par un afin de diminuer ou supprimer les vibrations et les bruits.

Ces panneaux peuvent être munis de rideaux anti-arc.

Dans une autre réalisation, non représentée, les panneaux comportent chacun une tôle métallique, par exemple en acier, munie de hublots en un matériau incassable montés sur joints de caoutchouc, par exemple pour la protection de centres d'usinage et/ou d'îlots de soudage.

Dans une autre réalisation, non représentée, les panneaux sont en une matière plastique de sécurité, par exemple en polycarbonate ou polyéthylène et servent à protéger contre les projections, tout en permettant de visualiser la zone à protéger et de réduire le bruit provoqué par la machine, ligne ou ensemble.

Dans une autre réalisation, non représentée, les panneaux comportent une tôle en acier protégeant des projections et/ou des rayonnements.

Dans ces réalisations, les panneaux sont revêtus d'une couche époxi, par exemple par système électro-statique.

Dans les réalisations représentées, la porte P est à vantail à simple battant et a par exemple une ouverture allant jusqu'à 1 500 mm entre poteaux.

Dans d'autres réalisations, non représentées, la porte P est à double battant jusqu'à 1 500 mm d'ouverture, à déplacement latéral en porte à faux allant jusqu'à 4 000 mm et par exemple compris entre 800 et 1 200 mm, à déplacement latéral avec rail supérieur à un battant jusqu'à 1 500 mm d'ouverture ou à deux battants jusqu'à 2 400 mm d'ouverture, ou la porte est automatique.

Chaque panneau peut être remplacé par une porte constituée d'un panneau de largeur entre poteaux inférieure à celle du panneau remplacé, par exemple inférieure de 100 mm, pour le passage d'accessoires.

Dans la réalisation représentée, la porte P peut être ouverte et fermée par pivotement autour de charnières, la reliant à un poteau V de l'enceinte I.

La porte P s'ouvre par pivotement vers l'extérieur de l'enceinte I.

Dans la description qui suit, les adjectifs gauche et droite se réfèrent à une direction X longitudinale du plan de la porte, perpendiculaire à l'axe de pivotement des charnières et s'en éloignant dans ce plan.

Les termes frontal et arrière se réfèrent à la direction Y, perpendiculaire au plan de la porte et dirigée, lorsque la porte est fermée, de l'extérieur de l'enceinte I vers l'intérieur de l'enceinte I.

Les adjectifs inférieur et supérieur se réfèrent à une direction Z du plan de la porte, normale par rapport au plan X Y, et parallèle à l'axe de pivotement des charnières habituellement vertical.

A la porte P est associé un dispositif de protection, comportant des moyens 1 formant serrure et des moyens 2 formant gâche.

Dans les réalisations représentées, les moyens 1 formant serrure sont prévus sur le vantail de la porte P, les moyens 2 formant gâche sont prévus dans son dormant ou encadrement fixe par rapport à l'enceinte I.

Dans d'autres réalisations, non représentées, les moyens 1 sont prévus sur l'encadrement de la porte et les moyens 2 sur le vantail de la porte.

Les moyens 1 formant serrure comportent un boîtier 3 parallélépipédique comprenant une face frontale 4 se raccordant, d'une part longitudinalement à deux faces latérales, opposées l'une à l'autre, supérieure 5 et inférieure 6, et d'autre part transversalement à deux faces latérales, opposées l'une à l'autre gauche 7 et droite 8.

Les faces latérales 5 à 8 se raccordent, de leur côté éloigné de la face frontale 4, à une face arrière 9.

La face arrière 9 est destinée à être tournée vers l'intérieur de l'enceinte I, tandis que la face frontale 4 est destinée à être tournée vers l'extérieur de l'enceinte I.

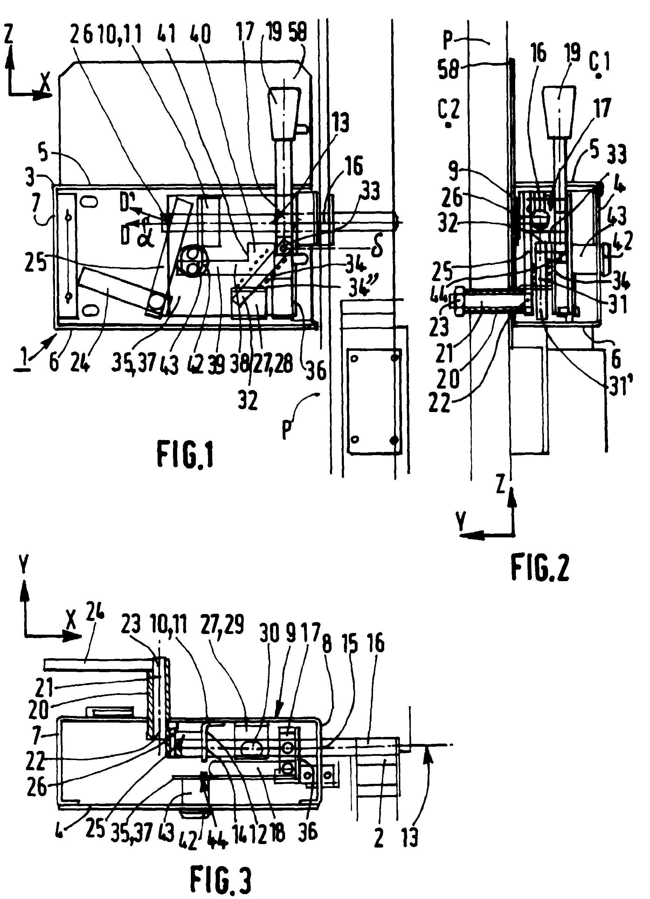

Les moyens 1 formant serrure comportent, à l'intérieur du boîtier 3, une plaque 10 de guidage comportant une première partie 11 de fixation à la face arrière 9 (figures 1 à 6) du boîtier 3 et une deuxième partie 12 coudée par rapport à la première partie 11 de fixation et s'étendant sensiblement parallèlement aux faces gauche et droite 7, 8.

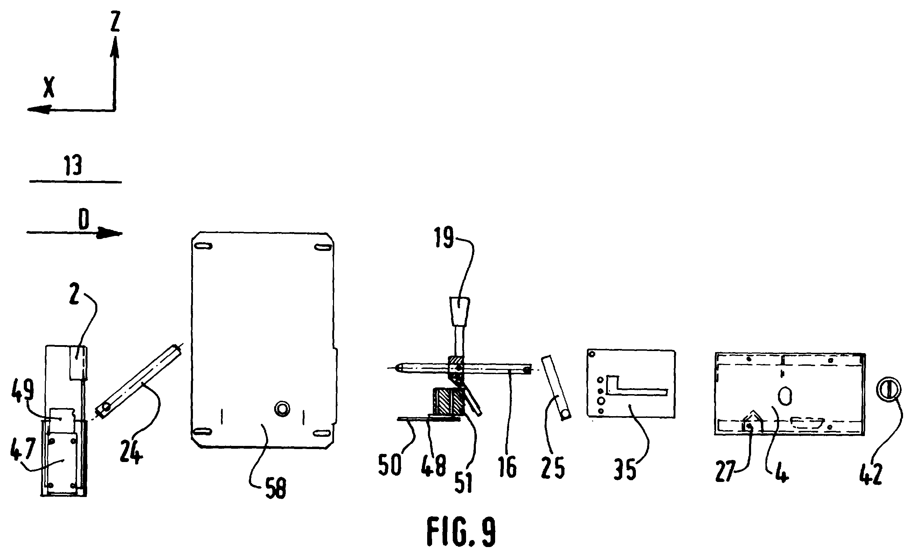

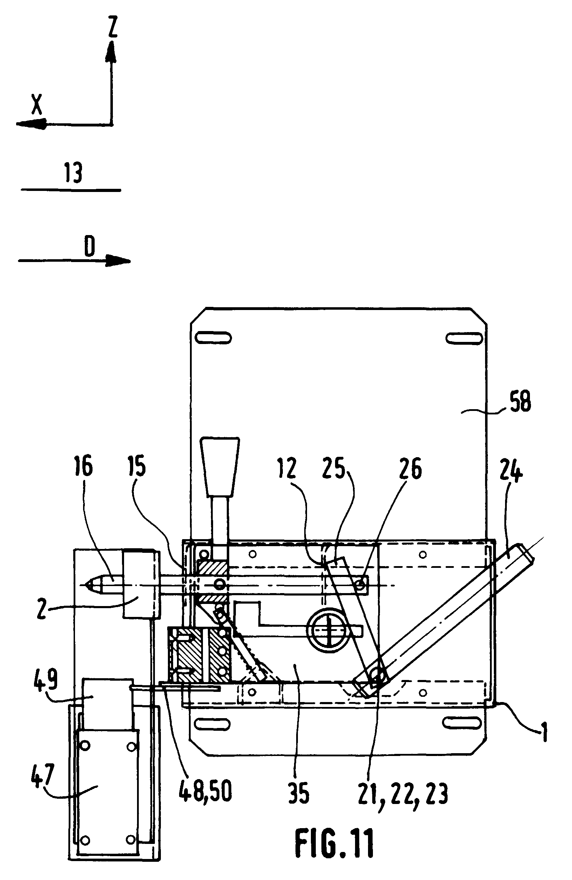

Aux figures 9, 10, 11 et 18, la partie 11 sert à la fixation de la plaque 10 à la face supérieure 5.

La deuxième partie 12 de la plaque 10 et la face droite 8 comportent chacune, face à face suivant une direction principale 13, un perçage, respectivement 14 et 15.

Dans la réalisation représentée, la direction principale 13 est parallèle à la direction X longitudinale.

Dans d'autres réalisations, non représentées, la direction principale 13 est une autre direction du plan X Z de la porte P.

Les moyens 1 formant serrure comportent un pêne 16, guidé en translation suivant la direction principale 13 dans les perçages 14, 15.

Dans la réalisation représentée, les perçages 14, 15 sont circulaires et le pêne 16 comprend une barre cylindrique de section circulaire légèrement inférieure à celle des perçages 14, 15.

Dans d'autres réalisations, non représentées, le pêne est de section non circulaire et les perçages entourent le pêne, permettant de le guider selon la direction principale.

Les moyens 1 formant serrure comportent, à l'intérieur du boîtier 3, un support 17 fixé au pêne 16, entre la deuxième partie 12 de la plaque de guidage 10 et la face droite 8.

Les moyens formant serrure 1 comportent un premier organe 19 de manoeuvre manuelle du pêne 16.

Dans la réalisation représentée, le premier organe 19 de manoeuvre manuelle est exclusivement mécanique et autonome et comprend une manette fixée dans le boîtier 3 au support 17.

La face supérieure 5 du boîtier 3 comporte une fente 18 dirigée suivant la direction principale 13, pour le passage de cette manette 19.

Le premier organe 19 de manoeuvre manuelle est monté d'un premier côté C1 tourné vers l'extérieur de la porte P et accessible depuis l'extérieur de l'enceinte I.

Le premier organe 19 de manoeuvre permet de déplacer à la main le pêne 16 en translation suivant la direction principale 13, entre l'une et l'autre de deux première et deuxième positions extrêmes de verrouillage et déverrouillage.

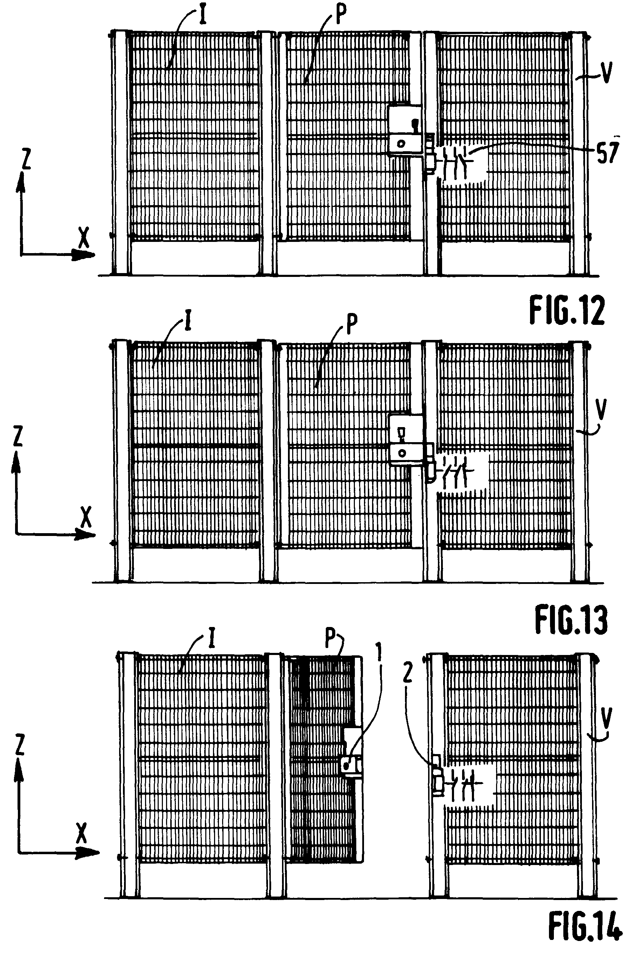

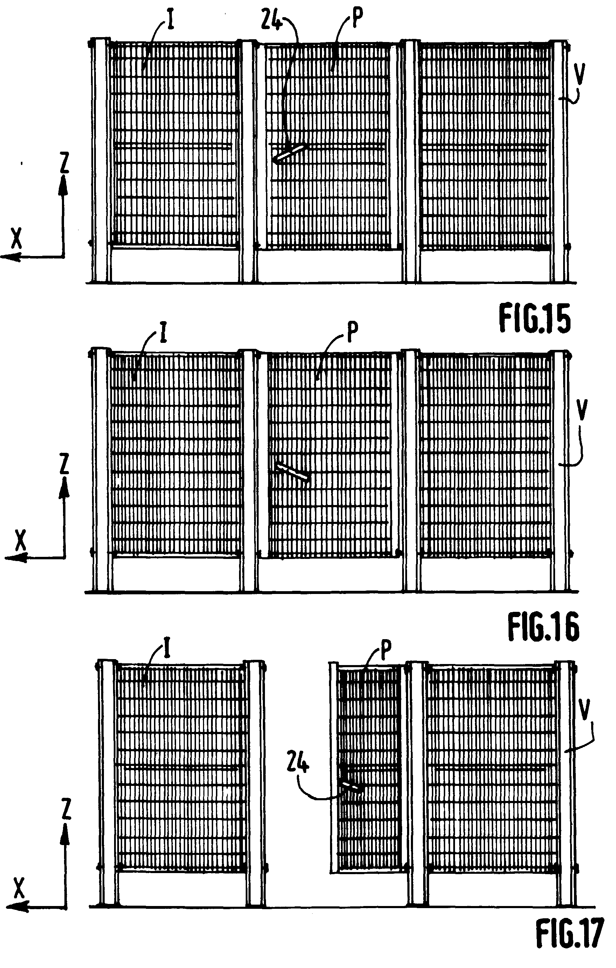

Aux figures 1, 2, 3, 9, 11, 12 et 15, le pêne 16 se trouve en position de verrouillage, dans laquelle le pêne 16 fait saillie du boîtier 3 par le perçage 15 de la face droite 8 et est engagé dans les moyens 2 formant gâche.

En position de verrouillage, la porte P est maintenue fermée empêchant une personne d'entrer dans l'enceinte ou d'en sortir.

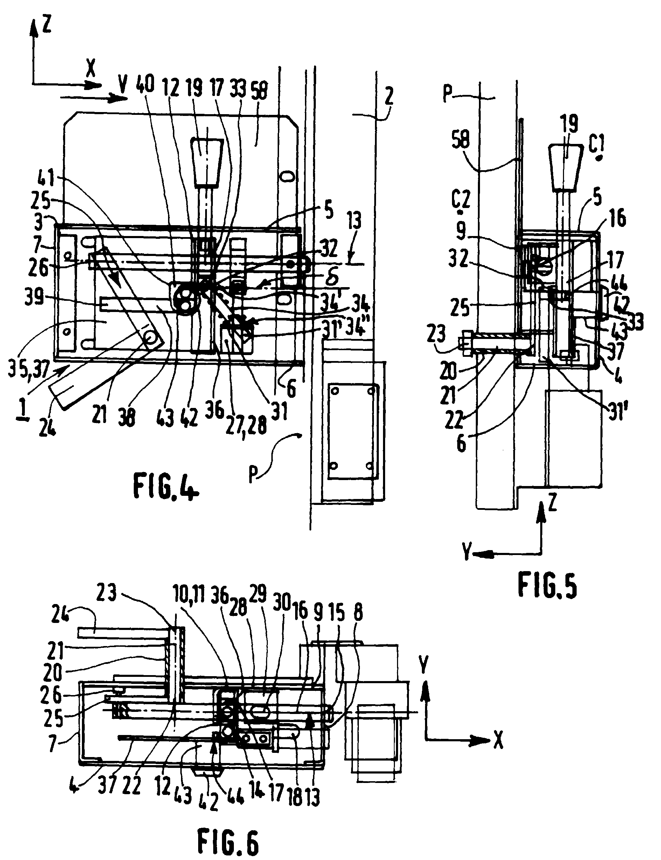

Aux figures 4, 5, 6, 10, 13, 14, 16, 17 et 18, le pêne 16 se trouve en position de déverrouillage, dans laquelle il est désengagé des moyens 2 formant gâche, permettant le passage de la porte entre l'une et l'autre de ses positions fermée et ouverte.

Le pêne 16 passe entre l'une et l'autre de ses positions de verrouillage et de déverrouillage, exclusivement par translation, suivant la direction principale 13.

Lors de cette translation, la course du support 17 est située dans le boîtier 3 entre la deuxième partie 12 de la plaque 10 et la face droite 8 et/ou est limitée par celles-ci.

Le dispositif de protection est tel que le pêne 16 ne peut passer de la position de déverrouillage à la position de verrouillage que par manoeuvre du premier côté C1.

Le dispositif de protection comprend des moyens 21 à 26 de sécurité permettant à une personne accidentellement enfermée dans l'enceinte I de pouvoir s'en échapper par la porte P.

Les moyens de sécurité comportent :
- un second organe 24 de manoeuvre manuelle du pêne 16 ;
- un organe 21 de transmission directe de mouvement ;
- un organe 25 d'entraînement.

Le second organe 24 de manoeuvre manuelle est accessible d'un second côté C2, opposé au premier côté C1. Dans l'exemple représenté, le second côté C2 est tourné vers l'intérieur de l'enceinte I.

L'organe 21 de transmission directe est relié solidairement d'une part par une première partie extrême 22 à l'organe 25 d'entraînement et d'autre part, par une seconde partie extrême 23 au second organe 24 de manoeuvre.

Ainsi, le second organe 24 de manoeuvre est solidaire de l'organe 25 d'entraînement.

Les moyens de sécurité sont aptes à ne faire passer le pêne 16 que de sa position de verrouillage à sa position de déverrouillage suivant un sens D de déverrouillage, en agissant positivement et directement sur le pêne 16.

L'organe 25 d'entraînement est apte à entraîner le pêne 16, ou un organe mené 26 solidaire de ce dernier, dans le sens D de déverrouillage, et ce uniquement lorsque le second organe 24 de manoeuvre manuelle est actionné d'une certaine manière.

Dans la réalisation représentée, l'organe 21 de transmission comprend un tourillon monté tournant dans un tube 20 cylindrique circulaire creux traversant la face arriére 9 et fixé à celle-ci.

L'organe 24 de manoeuvre manuelle comprend une poignée.

L'organe 25 d'entraînement comprend une barre, par exemple perpendiculaire au tourillon 21.

Le tourillon 21 est solidaire en rotation de la poignée 24 par sa seconde partie extrême 23 située à l'extérieur du boîtier 3 et est solidaire en rotation de la barre 25 par sa première partie extrême 22 située dans le boîtier 3.

Dans les réalisations représentées, la poignée 24 est perpendiculaire au tourillon 21, lui-même perpendiculaire à la barre 25.

Dans les réalisations représentées, un organe mené 26 comprenant une broche est fixé au pêne 16, la broche faisant saillie de celui-ci dans un plan perpendiculaire à la direction principale 13.

La broche 26 est dirigée suivant la direction Y et est fixée, dans le boîtier 3, au pêne 16 à distance de la deuxième partie 12 de la plaque 10 de guidage, sur une partie du pêne 16 ne se trouvant pas entre la partie 12 et la plaque droite 8 en position de verrouillage du pêne 16.

La broche 26 est dirigée vers la face arriére 9.

Dans d'autres réalisations, non représentées, le tube est en oblique par rapport à la plaque 9 et/ou la poignée 24 est en oblique par rapport au tourillon 21 et/ou la barre 25 est en oblique par rapport au tourillon 21 et/ou la broche 26 se trouve, en position de verrouillage du pêne, entre la partie 12 de la plaque 10 de guidage et la plaque droite 8, à distance de celles-ci.

La barre 25 est telle qu'elle se trouve, en position de verrouillage, de déverrouillage ainsi qu'entre ces positions, entre la broche 26 et la partie 12 de la plaque 10 de guidage.

En position de verrouillage du pêne 16, la rotation de la poignée 24 dans le sens rapprochant la barre 25 de la broche 26, dans le sens inverse des aiguilles d'une montre à la figure 1, entraîne la barre 25 du même angle de rotation.

Le pêne 16 est entraîné en translation dans le sens D de déverrouillage par application positive suivant un sens D' de la barre 25 à la broche 26.

Lors de cette application positive, la barre 25 exerce une force sur la broche 26, faisant un angle à aigu avec le sens D de déverrouillage du pêne 16.

En position de déverrouillage du pêne 16, la barre 25 est libre de tourner entre la broche 26 et la deuxième partie 12 de la plaque 10 de guidage, sans entraîner le pêne 16 en translation jusqu'à sa position de verrouillage, le pêne 16 ne comportant pas, entre la broche 26 et la partie 12, de pièces solidaires en translation, rencontrant la barre 25.

Les moyens formant serrure 1 comportent un système de stabilisation du pêne dans ses positions de verrouillage et déverrouillage.

Ce système de stabilisation comporte dans le boîtier 3, une deuxième plaque 27 comportant une première partie 28 fixée à la face arrière 9 et une deuxième partie 29 de butée coudée par rapport à la première partie 28 et tournée vers le pêne 16.

Dans la réalisation représentée aux figures 1 à 6, la deuxième partie 29 de butée est sensiblement plane et tournée vers le pêne 16, en étant par exemple parallèle à la direction 13.

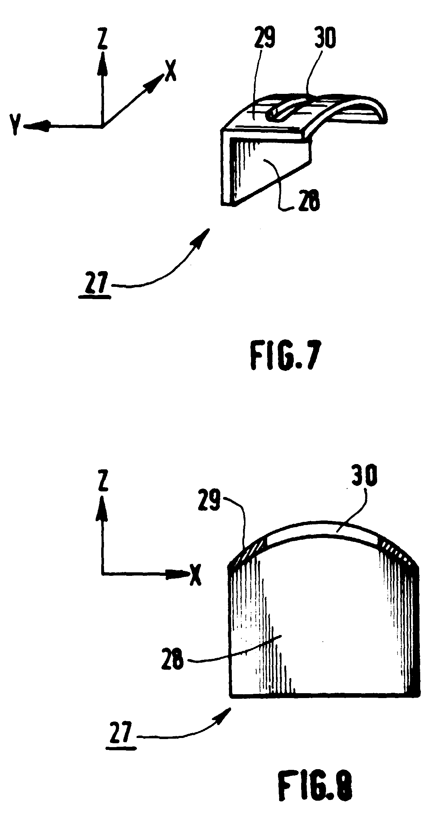

Dans la variante représentée aux figures 7 à 11, la deuxième partie 29 de butée de la plaque 27 est arquée avec une courbure dirigée vers la face inférieure 6.

La deuxième partie 29 de butée comporte un trou oblong 30 destiné au passage d'une partie extrême d'une seconde broche 31, dont l'autre partie extrême 32 est articulée à un axe 33 d'articulation solidaire en translation du pêne 16.

Dans les réalisations représentées, le trou oblong fait face à une partie du pêne 16 se trouvant entre la deuxième partie 12 de la plaque 10 de guidage et la face droite 8.

Dans d'autres réalisations, non représentées, la partie 29 de butée de la plaque 27 est tournée en oblique par rapport au pêne 16 et/ou fait face, dans un plan perpendiculaire à la direction principale 13, à une partie du pêne 16 se trouvant entre la deuxième partie 12 et la face gauche 7.

Dans les réalisations représentées, l'axe 33 d'articulation est solidaire en translation du support 17.

Dans d'autres réalisations, non représentées, l'axe 33 d'articulation est solidaire d'une autre pièce solidaire en translation du pêne 16 ou directement du pêne 16.

L'axe 33 d'articulation est sensiblement perpendiculaire à la direction principale 13.

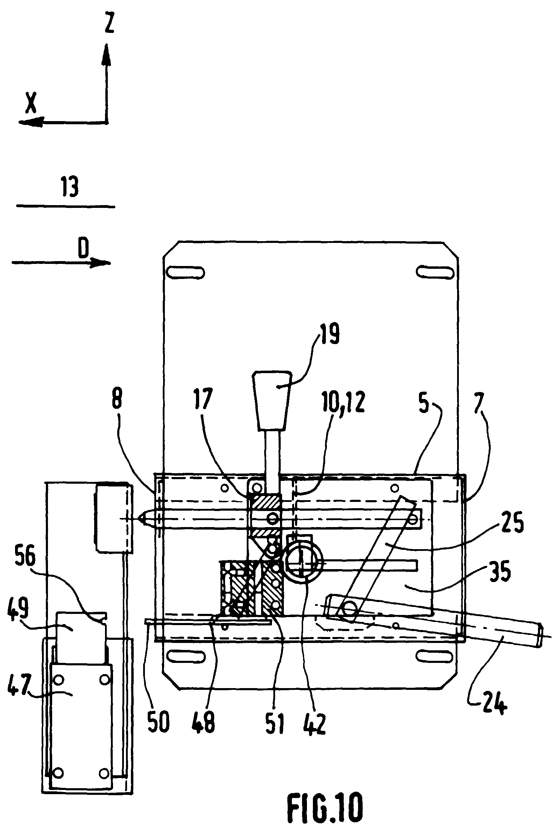

Un ressort hélicoïdal 34 est comprimé par ses première et deuxième parties extrêmes 34', 34'' entre l'axe 33 d'articulation et la deuxième partie 29 de butée de la plaque 27, par exemple par l'intermédiaire de rondelles représentées à la figure 10.

Les spires du ressort 34 entourent la seconde broche 31 et sont guidées selon celle-ci, la seconde broche 31 étant insérée dans l'axe de l'hélice formée par les spires.

La première partie extrême 34' du ressort 34 à une course dirigée suivant une droite δ, sensiblement parallèle à la direction principale 13, lorsque le pêne 16 est déplacé entre ses positions extrêmes.

La partie de butée 29 est à distance de la droite δ.

La deuxième partie 29 de butée de la deuxième plaque 27 est agencée de telle sorte que les positions de verrouillage et de déverrouillage soient stables.

La plus petite distance entre les parties extrêmes 34', 34'' du ressort 34 correspond à une position du pêne 16, intermédiaire entre ses positions de verrouillage et de déverrouillage.

Le ressort 34 repousse ainsi le pêne 16 vers la position de verrouillage ou de déverrouillage.

Les moyens 1 formant serrure comprennent des moyens 35 à 46 de blocage du pêne 16 en position de déverrouillage.

Une troisième plaque coudée 35, fixée par une première partie 36 au support 17 et comportant une deuxième partie 37 s'étendant parallèlement à la direction principale 13, est prévue dans le boîtier 3.

Dans les réalisations représentées, la deuxième partie 37 est parallèle au plan X Z.

Dans d'autres réalisations, non représentées, la deuxième partie 37 est parallèle à la direction principale 13 en étant inclinée par rapport à la direction Z.

La deuxième partie 37 comporte une découpe 38 en forme de L, dont une première branche 39 s'étend parallèlement à la direction principale 13 et dont une seconde branche 40 s'étend perpendiculairement à la direction principale 13.

La deuxième branche 40 est délimitée, dans le sens D de dèverrouillage, par un bord 41 de la plaque 35.

Les moyens de blocage comportent, traversant la face frontale 4, un verrou 42 fixé à celle-ci et comportant une pièce 43 mobile en rotation perpendiculairement à la face frontale 4.

La pièce mobile 43 peut être tournée par une clé de consignation insérée dans le verrou 42 à l'extérieur du boîtier 3 du premier côté C1, pouvant être enlevée et non représentée.

Dans d'autres réalisations, non représentées, la pièce oblique 43 peut être tournée par un bouton ou une poignée solidaire de celle-ci et prévue à l'extérieur du boîtier 3 du premier côté C1.

Le verrou 42 comporte une saillie 44 engagée dans la découpe 38, solidaire de la pièce mobile 43 et excentrée par rapport à son axe de rotation.

La saillie 44 comporte une position de libération, dans laquelle elle se trouve dans la première partie 39 de la découpe 38, permettant la translation du pêne 16 entre l'une et l'autre de ses deux positions de verrouillage et de déverrouillage.

Elle a d'autre part une position de blocage, qu'elle peut prendre en position de déverrouillage du pêne 16.

Dans cette position de blocage, la saillie 44 est engagée dans la deuxième partie 40 de la découpe 38 et est appliquée au bord 41 empêchant la translation du pêne 16 dans la position de verrouillage.

En position de déverrouillage du pêne 13, la saillie 44 peut passer entre l'une et l'autre de ses positions de blocage et de libération par la pièce mobile 43 du verrou.

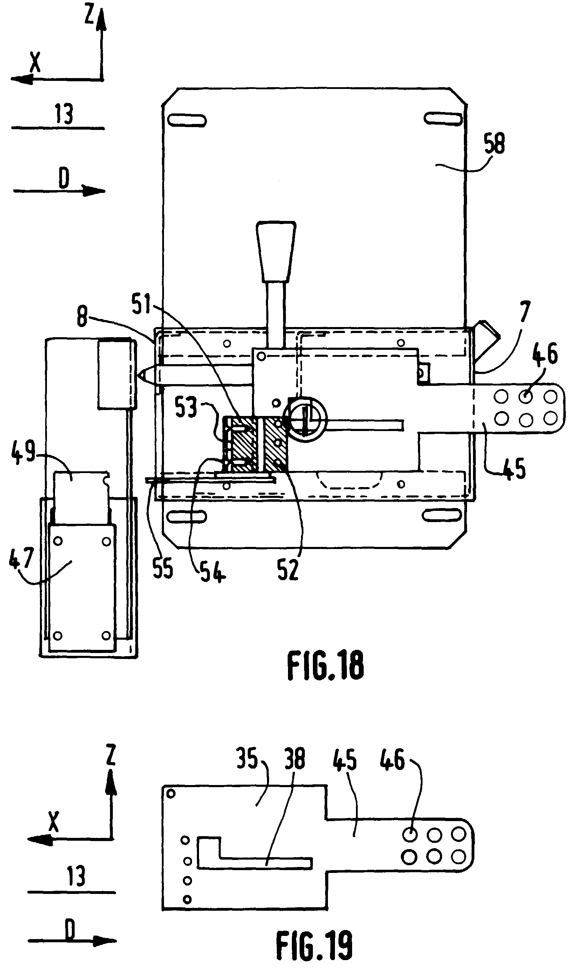

Dans la variante représentée aux figures 18 et 19, la troisième plaque 35 comporte un prolongement 45 de sa deuxième partie 37 dans le sens D de déverrouillage.

Le prolongement 45 comporte des trous 46 de passage d'un cadenas ou autre, destiné à maintenir le pêne 16 en position de déverrouillage par l'intermédiaire de la plaque 35.

En position de déverrouillage, le prolongement 45 fait saillie du boîtier par la face latérale 7 et est accessible de l'extérieur et du premier côté C1 pour la pose ou l'enlèvement du cadenas.

Le cadenas comporte une surface de butée contre la face 7 en position de déverrouillage.

Le dispositif de protection comporte des moyens 47 de contrôle, autorisant le fonctionnement de la machine, ligne ou ensemble compris dans l'enceinte I, lorsque la porte P est fermée et verrouillée.

Les moyens de contrôle 47 ne permettent pas ce fonctionnement lorsque la porte P est déverrouillée.

Les moyens 47 de contrôle comportent :
- un organe 48 d'indication de fermeture verrouillée ou non de la porte P, prévu sur les moyens 1 formant serrure ; et
- un organe 49 de mise en fonctionnement ou d'interruption du fonctionnement de la machine, ligne ou ensemble, selon que l'organe 48 indique une fermeture verrouillée ou non de la porte P respectivement.

L'organe 49 est prévu sur les moyens 2 formant gâche.

Les organes 48 et 49 coopèrent électriquement, magnétiquement ou autre.

Dans les réalisations représentées aux figures 9 à 19, l'organe 48 d'indication comporte une languette 50 solidaire en translation du pêne 16, guidée parallèlement à la direction principale 13 et faisant saillie de la face latérale 8 en position de verrouillage du pêne 16.

La languette 50 est fixée à la troisième plaque 35, par exemple à sa deuxième partie 37 du côté tourné vers la face 8, par l'intermédiaire d'une pièce de fixation 51.

La pièce 51 est fixée à la plaque 35 par l'intermédiaire d'une ou plusieurs vis 52 de fixation.

Tandis que la languette 50 est solidaire de broches de fixation 53, qui traversent verticalement la pièce 51 et dont l'une est vissée à celle-ci par des vis 54 de maintien.

La face 8 comporte un trou 55 de passage de la languette 50. L'organe 49 comprend un contact 56 électrique coopérant avec la languette 50 et comportant un ou plusieurs interrupteurs 57 de commande et de signalisation de fonctionnement de la machine, ligne ou ensemble, lesquels interrupteurs sont actionnés par la présence ou l'absence de la languette 50 dans le contact 56.

Les moyens 47 de contrôle sont distincts du pêne 16 et ne participent pas au verrouillage de la porte en position fermée.

Le dispositif de protection est tel que le premier organe de manoeuvre 19 est inaccessible du second côté C2, c'est-à-dire l'intérieur de l'enceinte.

A cet effet, la porte P et les panneaux M adjacents sont à maille suffisamment serrées pour empêcher le passage des doigts ou sont pleins.

Dans les réalisations représentées, le dispositif de protection comporte une plaque 58 interposée entre l'organe 19 de manoeuvre et le second côté C2.

La plaque 58 a une largeur en face de et supérieure ou égale à la course de l'organe 19 de manoeuvre entre les positions de verrouillage et de déverrouillage et a une hauteur supérieure à celui-ci.

Le boîtier 3 est fixé à la plaque 58 qui forme par exemple sa face arrière 9.

L'organe mobile 48 et sa languette mobile 50 sont non démontables, pour une plus grande sécurité de fonctionnement.

L'organe 48 et la languette 50 sont également protégés pour éviter toute détérioration prématurée.

En position de déverrouillage, la languette 50 affleure à ou dépasse légèrement de la plaque 8 par le trou 55 en restant dans celui-ci, de manière à restreindre ses possibilités de démontage.

Les poteaux V et/ou certains des bords ou tous les bords des panneaux M et/ou le dispositif de protection sont tels qu'ils peuvent être facilement distingués du reste de l'enceinte I par les personnes et ont par exemple une couleur vive.

Au contraire, l'intérieur des panneaux M et de la porte P sont grillagés avec une couleur sombre et mate, afin d'améliorer la vision du danger dans l'enceinte I, et ont par exemple leurs mailles recouvertes d'une poudre époxy cuite au four de couleur anthracite brillance 70 % en RAL 7037.

La plaque 58 porte éventuellement un écriteau indiquant l'accès réservé exclusivement au personnel autorisé, visible de l'extérieur.

Le dispositif de protection comporte par ailleurs des moyens de réglage de la position réciproque des moyens 1 formant serrure et des moyens 2 formant gâche et/ou des moyens de réglage de la position réciproque de l'organe mobile 48 d'indication et de l'organe 49 de mise en fonctionnement.

## Revendications

1. Dispositif de protection destiné à être associé à une porte (P) faisant partie d'une enceinte (I) de protection d'une machine, d'une ligne ou d'un ensemble automatisé ou robotisé, comprenant :
- des moyens (1) formant serrure, comportant, en premier lieu, un pêne (16) ayant une position de verrouillage et une position de déverrouillage ; et, en deuxième lieu, un premier organe (19) de manoeuvre manuelle monté d'un premier côté (C1) et permettant de déplacer le pêne (16) entre les deux positions ; les moyens (1) formant serrure ayant pour fonction de permettre le verrouillage de la porte (P) en position fermée ;
- des moyens (47) de contrôle aptes à ce que le fonctionnement de la machine, la ligne ou l'ensemble soit permis lorsque la porte (P) est fermée et verrouillée ;
- des moyens (21 à 26) de sécurité comportant un second organe (24) de manoeuvre manuelle monté d'un second côté (C2) opposé au premier, et ayant pour fonction de pouvoir manoeuvrer le pêne (16) afin de permettre à une personne accidentellement enfermée dans l'enceinte (I) de pouvoir s'en s'échapper,
caractérisé en ce que :
- le premier organe (19) de manoeuvre est inaccessible depuis le second côté (C2), même si la porte (P) et/ou l'enceinte de protection (I) est de type grillagée ;
- le pêne (16) est monté coulissant entre la position de verrouillage et la position de déverrouillage ;
- les moyens de contrôle (47) sont structurellement distincts du pêne (16), ne participent pas au verrouillage de la porte (P) en position fermée et comportent un organe (48) mobile d'indication de fermeture verrouillée coopérant avec un organe (49) de mise en fonctionnement de la machine, ligne ou ensemble tel qu'un contacteur électrique (56) de sécurité ;
- les moyens de sécurité (21 à 26) sont aptes à fonctionner au moins pour le déverrouillage des moyens (1) formant serrure, en agissant positivement et directement sur le pêne (16), pour son déverrouillage, sans l'intermédiaire d'un ressort ou autre ;
- une plaque (35) est guidée en translation par deux perçages (14, 15) dans lesquels le pêne (16) est engrené;
- la plaque (35) est fixée à une pièce (17) solidaire en translation du pêne (16) et porte également l'organe (48) d'indication de fermeture verrouillée ;
- la plaque (35) comporte une découpe (38) coopérant avec un verrou (42) pour bloquer cette plaque en position de déverrouillage.

2. Dispositif de protection selon la revendication 1, caractérisé en ce qu'il comporte en outre des moyens (35 à 46) de blocage situés du premier côté (C1), agissant sur le pêne (16), directement ou indirectement, pour le maintenir bloqué en position de déverrouillage ; ces moyens (35 à 46) de blocage incluant une clé de manoeuvre pouvant être enlevée.

3. Dispositif de protection selon l'une quelconque des revendications 1 et 2, caractérisé en ce qu'il est tel que le pêne (16) ne peut passer de la position de déverrouillage à la position de verrouillage que par manoeuvre par le premier côté (C1).

4. Dispositif de protection selon l'une quelconque des revendications 1 à 3, caractérisé en ce que le premier côté (C1) est tourné vers l'extérieur de la porte (P) et le deuxième côté (C2) est tourné vers l'intérieur de la porte (P).

5. Dispositif de protection selon l'une quelconque des revendications 1 à 4, caractérisé en ce que les moyens de sécurité (21 à 26) comprennent un organe (25) d'entraînement, qui est solidaire du second organe (24) de manoeuvre manuelle et qui est apte à entraîner le pêne (16), ou un organe mené (26) solidaire de ce dernier, de la position de verrouillage à la position de déverrouillage, lorsque le second organe (24) de manoeuvre manuelle est actionné.

6. Dispositif de protection selon la revendication 5, caractérisé en ce que le second organe (24) de manoeuvre manuelle est actionné par rotation du second côté (C2).

7. Dispositif de protection selon l'une quelconque des revendications 5 et 6, caractérisé en ce que les moyens (21 à 26) de sécurité comportent un organe (21) de transmission directe de mouvement du second organe (24) de manoeuvre à l'organe (25) d'entraînement, lequel organe (21) est solidaire de ces derniers.

8. Dispositif de protection selon la revendication 7, caractérisé en ce que l'organe (21) de transmission directe comporte un tourillon, le second organe de manoeuvre comprend une poignée (24) solidaire du tourillon (21) sensiblement perpendiculairement à celui-ci et l'organe (25) d'entraînement comporte une barre (25) solidaire du tourillon (21) sensiblement perpendiculairement à celui-ci, la rotation de la poignée (24) dans un sens déterminé de rotation provoquant la translation du pêne (16) de la position de verrouillage à celle de déverrouillage, par application positive de la barre (25) transversalement à l'organe mené (26) tel que broche suivant un sens (D') d'application faisant un angle aigu (à) avec le sens (D) de déverrouillage du pêne (16).

9. Dispositif de protection selon l'une quelconque des revendications 1 à 8, caractérisé en ce que le premier organe (19) de manoeuvre manuelle est autonome et comporte une manette (19) solidaire en translation du pêne (16) et accessible exclusivement du premier côté (C1).

10. Dispositif de protection selon l'une quelconque des revendications 1 à 9, caractérisé en ce que l'organe mobile (48) d'indication de fermeture verrouillée comprend une languette (50) mobile parallélement à la direction principale (13) de déplacement du pêne (16) et solidaire en translation de celui-ci.

11. Dispositif de protection selon l'une quelconque des revendications précédentes, caractérisé en ce que la porte (P) et/ou les parties (M) adjacentes de l'enceinte (I) sont à mailles serrées empêchant le passage des doigts du second côté (C2) vers le premier côté (C1) et/ou sont pleines et/ou une plaque (58) est interposée entre le premier organe (19) de manoeuvre manuelle et le second côté (C2).

12. Dispositif de protection selon l'une quelconque des revendications 1 à 11, caractérisé en ce qu'il comporte un système (27 à 34) de stabilisation du pêne (16) dans ses positions de verrouillage et de déverrouillage.

13. Dispositif de protection selon la revendication 12, caractérisé en ce que le système de stabilisation comprend :
- un ressort (34) hélicoïdal, appliqué, par une partie extrême (34') à une pièce (17) solidaire en translation du pêne (16), la première partie extrême (34') du ressort (34) ayant une course dirigée suivant une droite (δ), sensiblement parallèle à la direction principale (13) de déplacement du pêne (16) entre ses positions,
- une butée (29), à distance de ladite droite (δ), pour une seconde partie extrême (34'') du ressort (34),
- le ressort (34) est comprimé et guidé entre la butée (29) et ladite pièce (17) solidaire du pêne (16),
- la plus petite distance entre les parties extrêmes (34', 34'') du ressort (34) correspondant à une position du pêne (16), intermédiaire entre ses positions de verrouillage et de déverrouillage.

14. Dispositif de protection selon la revendication 13, caractérisé en ce que la butée (29) comprend une plaque (29), qui est sensiblement parallèle à ladite droite (δ) et dans laquelle est ménagé un trou (30), le ressort hélicoïdal (34) est guidé par une seconde broche (31), qui est insérée dans l'axe de son hélice, dont une partie extrême (32) est articulée à ladite pièce (17) solidaire en translation du pêne (16) suivant un axe (33) d'articulation sensiblement perpendiculaire à la direction principale (13), et dont l'autre partie extrême (31') est introduite dans le trou (30),
le ressort (34) étant comprimé entre l'axe (32) d'articulation et la plaque (29).

15. Dispositif de protection selon la revendication 14, caractérisée en ce qu'une rondelle de butée enfilée sur la seconde broche (31) est insérée entre la première partie extrême (34') du ressort (34) et l'axe d'articulation (33), et/ou entre la seconde partie extrême (34'') du ressort (34) et la plaque (29).

16. Dispositif de protection selon la revendication 2, caractérisé en ce que les moyens (35 à 46) de blocage comprennent :
- un verrou (42), monté du second côté (C2), comportant un second tourillon (43) monté tournant sensiblement perpendiculairement à la direction (13) principale de déplacement du pêne (16), une saillie (44) solidaire du second tourillon (43), sensiblement parallèle et excentrée par rapport à celui-ci,
- le pêne (16) est solidaire d'une seconde butée (41) orientée, suivant la trajectoire principale (13), dans le second sens de verrouillage du pêne (16),
- la saillie (44) étant appliquée à la butée (41), en position de déverrouillage du pêne (16) et en position de blocage, empêchant le déplacement du pêne (16) vers la position de verrouillage,
- la saillie (44) se trouvant, en position de libération, à distance de la butée (41), permettant le déplacement du pêne (16) entre ses deux positions,
- le passage entre l'une et l'autre des positions de libération et de blocage étant effectué par rotation du second tourillon (43).

17. Dispositif de protection selon la revendication 16, caractérisée en ce que la plaque (35) s'étend dans un plan perpendiculaire au second tourillon (43),
la plaque (35) comportant un évidement (38 à 40), dans lequel, en position de déverrouillage, la saillie (44) est introduite et qui permet le passage de celle-ci entre l'une et l'autre de ses positions de blocage et de libération ;
la seconde butée (41) est formée par un bord (41) de la plaque (35), bordant l'évidement (38 à 40) et orienté suivant la direction principale (13) dans le second sens (V) de verrouillage du pêne (16),
la plaque (35) s'étendant de sorte à pouvoir être déplacée, en position de libération de la saillie (44), suivant la direction principale, lorsque le pêne (16) est déplacé entre ses deux positions.

18. Dispositif de protection selon la revendication 17, caractérisée en ce que la plaque (35) comporte, comme évidement, une découpe (38) comportant une première partie (39) sensiblement parallèle à la direction principale et une deuxième partie (40), adjacente à la première (39),
la saillie (44) étant introduite en position de libération, dans la première partie (39) de la découpe (38) et étant introduite, en position de blocage, dans la seconde partie (40) de la découpe (38), la butée (41) étant formée par le bord (41) de la plaque (35), délimitant la seconde partie (40) de la découpe (35) et saillant suivant la direction principale (13) dans le sens de verrouillage.

19. Dispositif de protection selon la revendication 17 ou 18, caractérisé en ce que la plaque (35) solidaire du pêne (16) comporte un prolongement (45) dans le sens (D) de déverrouillage, lequel prolongement (45) comporte des trous (46) de passage d'un cadenas ou autre, destiné à maintenir le pêne (16) en position de déverrouillage.

20. Dispositif de protection selon l'une quelconque des revendications 1 à 19, caractérisé en ce que le premier côté (C1) est séparé du second côté (C2), dans la région du premier organe (19) de manoeuvre manuelle, par une plaque (58).

21. Dispositif de protection selon l'une quelconque des revendications 1 à 20, caractérisé en ce qu'il comprend des moyens de réglage de la position réciproque des moyens (1) formant serrure et de moyens (2) complémentaires formant gâche et/ou des moyens de réglage de la position réciproque de l'organe (48) d'indication et de l'organe (49) tel que contacteur (56).

22. Porte (P) destinée à faire partie d'une enceinte (I) de protection d'une machine, d'une ligne, ou d'un ensemble automatisé ou robotisé, comportant un dormant et un vantail ouvrant, caractérisée en ce qu'elle comporte un dispositif de protection selon l'une quelconque des revendications 1 à 21.

23. Porte (P) selon la revendication 21, caractérisée en ce que sont montés sur le vantail, le pêne (16), les premier et second organes de manoeuvre (19, 24), l'organe mobile (48) des moyens de contrôle (47) ; sont montés sur le dormant la gâche (2) et l'organe (49) de mise en fonctionnement tel que contacteur électrique de sécurité (56).

24. Porte (P) selon l'une quelconque des revendications 21 et 23, caractérisée en ce que la porte (P) est à vantail battant.

25. Porte selon l'une quelconque des revendications 21 à 24, caractérisée en ce que la porte (P) est de type grillagé, les mailles n'autorisant pas le passage des doigts.

26. Enceinte (I) de protection d'une machine, d'une ligne ou d'un ensemble automatisé ou robotisé, comportant des panneaux (M) de protection et au moins une porte (P) selon l'une quelconque des revendications 22 à 25.
